# EUROPEAN PATENT SPECIFICATION

(11) **EP 4 151 033 B1**
(45) Date of publication and mention of the grant of the patent: **18.03.2026**
(21) Application number: 20940979.6
(22) Date of filing: 16.06.2020
(51) Int. Cl.: H04W 74/00, H04W 48/14, H04W 76/19, H04W 8/26, H04W 76/38, H04W 76/11

(54) **DATA TRANSMISSION IN POWER EFFICIENT STATE**
DATENÜBERTRAGUNG IM LEISTUNGSEFFIZIENTEN ZUSTAND
TRANSMISSION DE DONNÉES DANS UN ÉTAT D'EFFICACITÉ ÉNERGÉTIQUE

(43) Date of publication of application: 22.03.2023
(73) Proprietor: ZTE Corporation, Shenzhen, Guangdong 518057 (CN)
(72) Inventor: HUANG, He, Shenzhen, Guangdong 518057 (CN)
(74) Representative: Vossius & Partner Patentanwälte Rechtsanwälte mbB
(86) International application number: PCT/CN2020/096269
(87) International publication number: WO 2021/253208

(56) References cited:
- EP-A1- 3 620 021
- WO-A1-2020/034560
- WO-A1-2021/147029
- CN-A- 110 213 799
- CN-A- 110 831 258
- OPPO: "Discussion on Efficient Small Data transmission in “Inactive” State", 3GPP DRAFT; R2-166187_DATA TRANSMISSION IN INACTIVE STATE-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kaohsiung; 20161010 - 20161014, 9 October 2016 (2016-10-09), Mobile Competence Centre ; 650, route des Lucioles ; F-06921 Sophia-Antipolis Cedex ; France , XP051150801
- ZTE CORPORATION, SANECHIPS: "Configured grant based small data transmission", 3GPP DRAFT; R2-2009192, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. eMeeting; 20191102 - 20191113, 22 October 2020 (2020-10-22), Mobile Competence Centre ; 650, route des Lucioles ; F-06921 Sophia-Antipolis Cedex ; France , XP051941256

## Description

### TECHNICAL FIELD

This patent document is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, are being discussed. WO 2020/034560 A1 and WO 2021/147029 A1 are related prior art, the latter according to Article 54(3) EPC.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. This document discloses methods, systems, and devices related to digital wireless communication, and more specifically, to techniques related to data transmission in a power efficient state.

The details of one or more implementations are set forth in the accompanying attachments, the drawings, and the description below. Other features will be apparent from the description and drawings, and from the clauses.

### BRIEF DESCRIPTION OF THE DRAWINGS

FIG. 1 is an example signaling process for inactive data transmission with RRC releasing after a completion of data transmission.
FIG. 2 is an example signaling process illustrating inactive data transmission with RRC involved and an RRC release before the start of data transmission.
FIG. 3 is an example signaling process for inactive data transmission without RRC involved. This example is however not part of the invention.
FIG. 4 is an example signaling process of an example for inactive data transmission without RRC involved. This example is however not part of the invention.
FIG. 5 is an example signaling process for anchor relocation with data buffered in the target node. This example is however not part of the invention.
FIG. 6 is an example signaling process for data forwarding used instead of anchor relocation. This example is however not part of the invention.
FIG. 7 is a block diagram of an example method for data transmission in a power efficient state.
FIG. 8 shows an example of a wireless communication system where techniques in accordance with one or more embodiments of the present technology can be applied.
FIG. 9 is a block diagram representation of a portion of a hardware platform.

### DETAILED DESCRIPTION

The development of the new generation of wireless communication - 5G New Radio (NR) communication - is a part of a continuous mobile broadband evolution process to meet the requirements of increasing network demand. NR will provide greater throughput to allow more users connected at the same time. Other aspects, such as energy consumption, device cost, spectral efficiency, and latency are also important to meeting the needs of various communication scenarios.

An RRC_INACTIVE state has been introduced to provide a power efficient state with low CP latency. For various services, such as a service with devices with variable data, since a device may need to report in case something out of the ordinary is detected, a short control plane (CP) latency may be required. Additionally, while considering power consumption, a UE can be configured in the RRC_INACTIVE state. Further, in many cases, besides video transmission in case of detecting something out of the ordinary, the device can periodically process small data transmissions.

However, for the UE in RRC_INACTIVE state, since the data transmission without state transition is not supported in the current standard, whenever the UE has data to transmit, the UE has to enter RRC_CONNECTED state first and then initiate the data transmission. This requirement to enter RRC_CONNECTED state to send or receive data can cause considerable signaling consumption and may not fulfill requirements identified by SA1 that the 3GPP system for supporting efficient signaling mechanisms (e.g., the requirement that the signaling overhead can be less than data payload). The problem may be particularly severe in case the data packet is small and infrequent.

NR can support the RRC_INACTIVE state and UEs with infrequent (periodic and/or non-periodic) data transmission are generally maintained by the network in the RRC_INACTIVE state. The RRC_INACTIVE state may not support data transmission. Accordingly, the UE first may resume the connection (i.e., move to RRC_CONNECTED state) for any downlink (DL) (MT) and uplink (UL) (MO) data. Connection resume and subsequently release to INACTIVE state may occur for each data transmission, no matter how small and infrequent the data packets are. This may result in unnecessary power consumption and signaling overhead.

An example of small and infrequent data traffic can include smartphone applications. Smartphone applications can include traffic from instant messaging services, heart-beat/keep-alive traffic from instant messages (IMs)/email clients and other apps, push notifications from various applications, etc. Another example of small and infrequent data traffic can include non-smartphone applications. Non-Smartphone applications can include traffic from wearables (e.g., periodic positioning information), sensors (e.g., Industrial Wireless Sensor Networks transmitting temperature, pressure readings periodically or in an event triggered manner), smart meters and smart meter networks sending periodic meter readings, etc.

A NR system can be efficient and flexible for low throughput short data bursts, support efficient signaling mechanisms (e.g., signaling is less than payload), reduce signaling overhead in general, etc. Signaling overhead from INACTIVE state UEs for small data packets can be a general problem and may become a critical issue with more UEs in NR not only for network performance and efficiency but also for the UE battery performance. In general, any device that has intermittent small data packets in INACTIVE state may benefit from enabling small data transmission in INACTIVE.

The key enablers for small data transmission in NR, namely the INACTIVE state, 2-step, 4-step RACH and configured grant type-1 may have already been specified in many instances. Accordingly, the present embodiments can enable data transmission in INACTIVE state for NR.

### System Overview

The present embodiments relate to enabling data transmission in an inactive state.

In addition, in the following description, the single connection case (e.g. NR standalone, or LTE standalone) may be used as an illustrative example, the present embodiments can be further extended to EN-DC, MR-DC, LTE-DC, NR-DC, and/or multiple connectivity cases as well, in which case both MCG and SCG can be configured to UE, and the inactive data transmission is applicable to MCG (master cell group) and/or SCG (secondary cell group) based on the configuration from network side.

The procedures as described herein can incorporate a 2-step random access channel (RACH) procedure and/or a 4-step RACH procedure. The payload of MsgA in 2-step RACH can be carried in Msg3 in 4-step RACH, and/or the payload carried in MsgB in 2-step RACH can be carried in Msg4 in 4-step RACH. In 2-step RACH, the contention resolution ID can be included in MsgB, but in 4-step RACH, the contention resolution ID may be included in Msg4.

In the following example embodiments 1 to 11 will be described. However, only example embodiment 1 is covered by the claims. Example embodiments 2 to 11 are presented for illustration purposes only.

### Example Embodiment 1

In a first example embodiments, multiple alternatives may be disclosed. A first alternative can include an RRC involved solution with RRC release after the completion of data transmission. A second alternative can include an RRC involved solution with RRC release before the end of data transmission. A third alternative not covered by the claims can include a solution without RRC messages involved.

In a first alternative, the UE can determine to initiate data transmission in an inactive state. The UE can initiate an RRC resume request procedure. In some embodiments, the data PDU and/or MAC SDU may be within the same MAC PDU.

In a CG based solution, according to the invention, the UE transmits the RRCResumeRequest message through the CG resource directly, optionally with data PDU and/or MAC SDU packet included as well. Once the message is transmitted, the UE monitors PDCCH using a known cell specific UE identifier, which according to the invention is the C-RNTI. The C-RNTI may be configured (i.e. by the network) or determined by the UE ahead in time i.e. during the time when the UE was in RRC_CONNECTED state earlier or configured by the network when the UE entered the INACTIVE state, but according to the invention the C-RNTI to be used for a subsequent Resume procedure is included by the network in the RRCRelease message - which is the message that caused the UE to enter the INACTIVE state. According to an example not covered by the claims, in a 2-step RACH based solution, a first step can include the UE initiating a RACH procedure and transmitting the RRCResumeRequest message through MsgA, optionally with data PDU and/or MAC SDU included as well. The second step, once the MsgA is transmitted, can include the UE receiving the MsgB. Once MsgB is received successfully, the UE can monitor the PDCCH with the C-RNTI included in MsgB, or with the preconfigured C-RNTI as explained above.

The UE can perform the UL/DL data transmission based on the grant received on PDCCH with the corresponding C-RNTI. Once the RRC release message is received, the UE can stop to monitor the PDCCH addressed to C-RNTI and discard the C-RNTI.

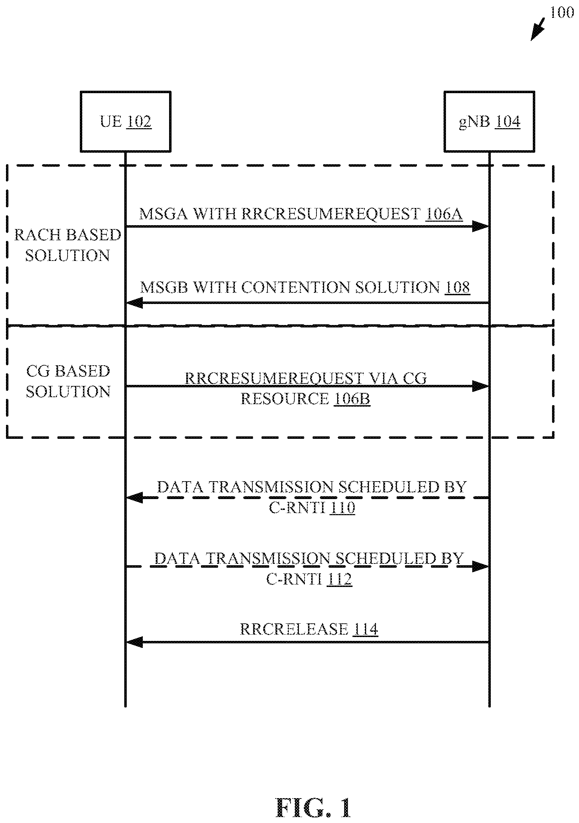

FIG. 1 is an example signaling process 100 for inactive data transmission with RRC releasing after a completion of data transmission. FIG. 1 may correspond to the first alternative as noted above.

As shown in FIG. 1, in step 106a, a RACH based solution (not covered by the claims) can include a MsgA with RRCResumeRequest from the UE 102 to the gNB 104. The UE may also optionally include data PDU and/or MAC SDU in the step 106a. The RACH based solution can also include MsgB with contention resolution in step 108 from a gNB 104 to the UE 102. In step 106b, a first message can include an RRCResumeRequest from the UE 102 to the gNB 104.

In step 110, the gNB 104 can send a data transmission scheduled by a C-RNTI to the UE 102. In step 112, the UE 102 can send a data transmission scheduled by a C-RNTI to the gNB 104. In step 114, the gNB 104 can send a RRCRelease message to the UE 102.

In another embodiment, a timer may be used by the UE to determine when to discard the C-RNTI and or to enter the normal INACTIVE state. This timer can be configured by the network and signaled to the UE. In a first alternative, the timer can be configured in an RRC reconfiguration message (e.g. before UE entering INACTIVE state). In a second alternative, the timer can be configured in an RRC release message (e.g. when UE enter INACTIVE state). In a third alternative, the timer can be configured in system information where the data transmission is performed.

The timer can be used to control the time duration of INACTIVE data transmission. In a first alternative, the timer can be started once the RRC resume message is generated or transmitted. In a second alternative, the timer can be started once the RRC resume message is delivered by the MAC layer to lower layer. In a third alternative, the timer can be started once the MsgB is received in 2-step RACH based procedure. In a fourth alternative, the timer can be started once the Msg4 or MAC RAR corresponding to the UE is received in 4-step RACH procedure. In a fifth alternative, the timer can be started once PDCCH addressed to C-RNTI is received. In a sixth alternative, the timer can be timeAlignmentTimer, or a new timer for inactive data transmission specifically.

The timer can be stopped whenever the RRC release is received. In case the timer expired, the UE can discard C-RNTI, stop the monitoring of PDCCH with C-RNTI, and/or suspend the DRB and/or PDCP.

A second alternative can include an RRC involved solution with RRC release before the end of data transmission. When the UE initiates the RRC resume request procedure, in a first alternative for a RACH based solution (not covered by the claims), the UE can initiate RACH procedure and transmit the RRCResumeRequest message through MsgA, optionally with data PDU or MAC SDU included as well. Once the MsgA is transmitted, the UE can receive the MsgB, besides the success RAR (e.g., contention resolution ID, C-RNTI, etc.), the RRCConnectionRelease message can be sent to UE (either in MsgB or in DL scheduling after MsgB).

In some embodiments, 4-step RACH procedure will be used, and the UE can initiate RACH procedure and transmit preamble first. Once preamble is transmitted, the UE can monitor PDCCH addressed to RA-RNTI to receive the MAC RAR. Once MAC RAR is received, the UE can transmit Msg3 (in which the RRCResumeRequest message can be included, and optionally with data PDU or MAC SDU) based on the UL grant received in MAC RAR. Once Msg3 is transmitted, the UE can monitor PDCCH addressed to C-RNTI or temporary C-RNTI included in MAC RAR) for the Msg4 reception. Once Msg4 is received, if CCCH message is include in Msg3, then the UE can perform contention resolution based on the contention resolution ID included in Msg4. If C-RNTI is include in Msg3, then C-RNTI can be used in the reception of Msg4 (e.g. monitor the PDCCH addressed to C-RNTI).

While various messages, such as a RRCResumeRequest message, are identified in the present embodiments, the present embodiments are not limited to use of such messages. For instance, the present embodiments can utilize an RRC setup request message for a terminal in an IDLE mode while it can also be possible to use a RRCResumeRequest message in the IDLE mode as well.

In another alternative, before the timer expires, the network may send a message to the UE which can either extend the timer or cause the UE to move to an RRC_CONNECTED state. The message from the network to the UE that causes the UE to extend the timer may be sent to the UE using a MAC CE or using an RRC message such as the RRCConnect message. Once such message is received, the UE can either extend the timer and stay longer in a state where it continues to monitor the C-RNTI or will move to an RRC_CONNECTED state. The network may determine that sending such a message to cause the UE to either extend the timer or to move to the RRC_CONNECTED state based on the observed traffic pattern from the UE or based on arrival of DL (MT) traffic etc.

According to the invention, in a second alternative including a CG based solution, the UE transmits the RRCResumeRequest message through CG resource directly, optionally with data packet included as well.

Once the message is transmitted, the UE monitors PDCCH with C-RNTI, which is configured when the UE entering inactive state. Once the RRCConnectionRelease is received successfully and, based on the message received the UE should process the inactive data transmission, an inactive data transmission timer can be started, and the UE can monitor PDCCH with C-RNTI until the expiration of the inactive data transmission timer. The timer may be restarted whenever an PDCCH scheduling with C-RNTI is received.

In an alternative, instead of the inactive data transmission timer, the timeAlignmentTimer can be used to control the inactive data transmission, in which case the UE will monitor the PDCCH addressed to C-RNTI in case the timeAlignmentTimer is running. The timeAlignmentTimer can be started or restarted whenever a Timing Advance Command is received. In an alternative, besides the inactive data transmission timer, the timeAlignmentTimer can be used to control the inactive data transmission as well, in which case the UE may monitor the PDCCH addressed to C-RNTI in case both the inactive data transmission timer and timeAlignmentTimer are running.

The UE can process the UL/DL transmission based on the grant received on PDCCH with the corresponding C-RNTI. Once the INACTIVE data transmission timer and/or timeAlignmentTimer expired, the UE can stop the PDCCH monitoring with C-RNTI, discard the C-RNTI, and/or suspend the DRB and/or PDCP. If the UE receives the data transmission stop indicator, which can be a MAC layer command (e.g. MAC CE) or physical layer command (e.g. DCI), or PDCP level command (e.g. PDCP control PDU), the UE can stop the PDCCH monitoring with C-RNTI, discard the C-RNTI, and/or suspend the DRB and/or PDCP.

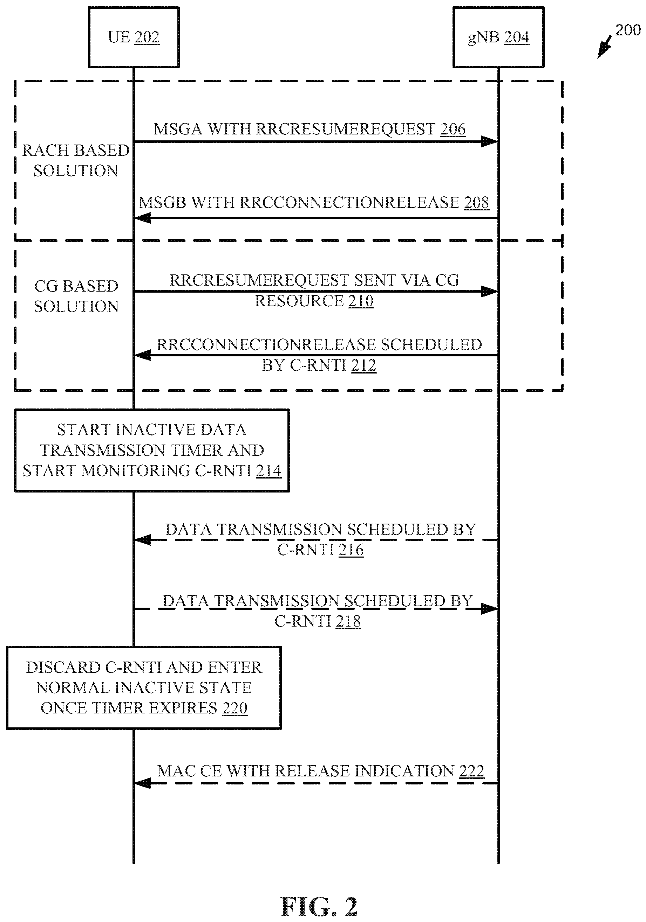

FIG. 2 is an example signaling process 200 illustrating inactive data transmission with RRC involved and an RRC release before the start of data transmission. As shown in FIG. 2, in a RACH based solution (not covered by the claims), the UE 202 can send a MsgA with RRC Resume Request 206 to gNB 204. The gNB 204 can send MsgB with RRC Connection Release 208 to UE 202.

According to the invention, in the CG based solution, the UE 202 sends an RRC Resume Request 210 via a CG resource to gNB 204. The gNB 204 sends an RRC Connection Release 212 scheduled by a C-RNTI to the UE 202.

In step 214, the UE can start an inactive data transmission timer and start monitoring C-RNTI. In step 216, the gNB 204 can send a data transmission scheduled by C-RNTI to the UE 202. In step 218, the UE 202 can send a data transmission scheduled by C-RNTI to the gNB 204.

While a gNB may be utilized an example network node, the present embodiments are not limited to such an instance. For example, a network node can include an eNB.

In step 220, the UE can discard C-RNTI and enter a normal inactive state once the timer expires. In step 222, the gNB 204 can send a MAC CE with release indication to the UE 202. In an alternative, the UE can discard C-RNTI and/or stop the monitoring of PDCCH addressed C-RNTI once the timeAlignmentTimer expires. In the normal inactive state, the UE may not be required to monitor the PDCCH addressed to the C-RNTI.

The length of timer (e.g. inactive data transmission timer and/or timeAlignmentTimer) can be configured for the UE. In a first alternative, the timer can be configured in an RRC reconfiguration message (e.g. before UE entering INACTIVE state). In a second alternative, the timer can be configured in an RRC release message (e.g. when UE enter INACTIVE state). In a third alternative, the timer can be configured in system information where the data transmission is performed.

A third alternative not covered by the claims can include inactive data transmission without RRC involved. For the UE to determine to initiate the INACTIVE data transmission, the UE can, in a first alternative in a RACH based solution, initiate RACH procedure, included in MsgA the MAC PDU with I-RNTI or C-RNTI and optionally the data PDU and/or MAC CE. Once the MsgA is transmitted, the UE can receive the MsgB. If I-RNTI is included in MsgA, the UE can monitor the PDCCH addressed to RA-RNTI (or MsgB RNTI) for the MsgB reception, and the I-RNTI in MsgB can be used for contention resolution. If C-RNTI is included in MsgA, the UE can monitor the PDCCH addressed to C-RNTI for the MsgB reception.

In a second alternative for the CG based solution, the UE can transmit the UL data packet through CG resource. Once the CG resource is transmitted, the UE can monitor PDCCH addressed to C-RNTI, which can be configured to the UE before or when UE entering INACTIVE state.

Once the MsgB is received successfully (for RACH based solution), or the initial UL transmission with CG resource is transmitted (CG based solution), an INACTIVE data transmission timer can be started, and the UE can monitor PDCCH addressed to C-RNTI until the expiration of the INACTIVE data transmission timer. The UE can process the UL/DL transmission based on the grant received on PDCCH with the corresponding C-RNTI.

In one alternative, instead of the inactive data transmission timer, the timeAlignmentTimer can be used to control the inactive data transmission, in which case the UE can monitor the PDCCH addressed to C-RNTI in case the timeAlignmentTimer is running. The timeAlignmentTimer may be started or restarted whenever a Timing Advance Command is received. In one alternative, besides the inactive data transmission timer, the timeAlignmentTimer can be used to control the inactive data transmission as well, in which case the UE will monitor the PDCCH addressed to C-RNTI in case both the inactive data transmission timer and timeAlignmentTimer are running.

Once the INACTIVE data **transmission** timer or timeAlignmentTimer expired, the UE can stop the PDCCH monitoring with C-RNTI, discard the C-RNTI, and/or suspend the DRB and/or PDCP.

If the UE receives the data transmission stop indicator, which can be a MAC layer command (e.g., MAC CE) or physical layer command (e.g., DCI), or PDCP level command (e.g., PDCP control PDU), the UE can stop the PDCCH monitoring with C-RNTI, discard the C-RNTI, and/or suspend the DRB and/or PDCP.

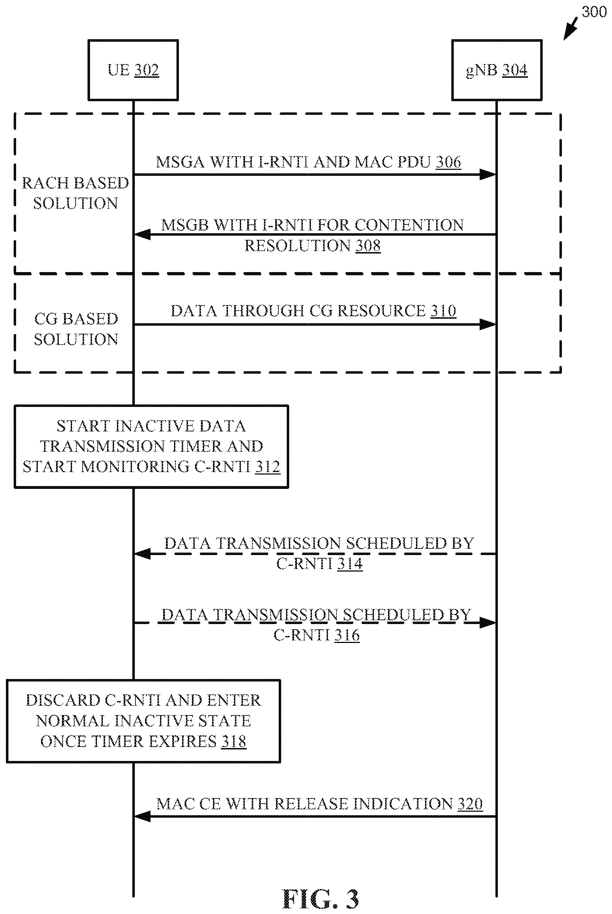

FIG. 3 is an example signaling process 300 for inactive data transmission without RRC involved. In step 306, in a RACH based solution, the UE 302 can send MsgA with I-RNTI and MAC PDU to gNB 304. In step 308, the gNB 304 can send MsgB with I-RNTI for contention resolution to UE 302. In a CG based solution, the UE 302 can send data through CG resource 310 to gNB 304.

In step 312, the UE 302 can state the inactive data transmission timer and start monitoring C-RNTI. In step 314, the gNB 304 can send data transmission scheduled by C-RNTI to UE 302. In step 316, the UE 302 can send data transmission scheduled by C-RNTI to gNB 304. In step 318, the UE 302 can discard C-RNTI and enter normal inactive state once the timer expires. In step 320, the gNB 304 can send a MAC CE with release indication to the UE 302.

In some embodiment, the inactive data transmission timer will be restarted whenever an PDCCH addressed to C-RNTI is received and/or whenever UL or DL grant for new transmission is received.

### Example Embodiment 2 (not part of the invention)

A second example embodiment relates to data forwarding. The data forwarding can be used in case the target gNB (where the inactive data transmission is performed) is different from the source gNB (where the UE enter the INACTIVE state).

To perform data forwarding, whenever the first NW node receive the data packet from the UE, the first NW node can forward data packet received to the second NW node.

The first NW node can forward the data packet in a control plane solution that includes the data packet can be included in a container within XnAP or XnAP message. The first NW node can forward the data packet in a user plane-based solution that includes the data packet able to be forwarded to source node through GTP tunnel, where the GTP tunnel can be either a common GTP tunnel which can be shared by multiple tunnel, or a UE specific tunnel.

With the data packet, the I-RNTI and/or cell id and/or PCI can be forwarded together with the data packet. For the UP based solution, the I-RNTI and/or cell id and/or PCI can be included in the header of user plane packet or in the control frame of user plane packet.

In this alternative, the release request or end marker can be sent from target node to source node to inform the end of inactive data transmission. The release request or end marker can be sent from source node to target node to inform the end of inactive data transmission. The release request or end marker can be sent in either control plane signaling (e.g., XnAP signaling) or in the user plane packet (e.g., in the header of user plane packet or in user plane control frame).

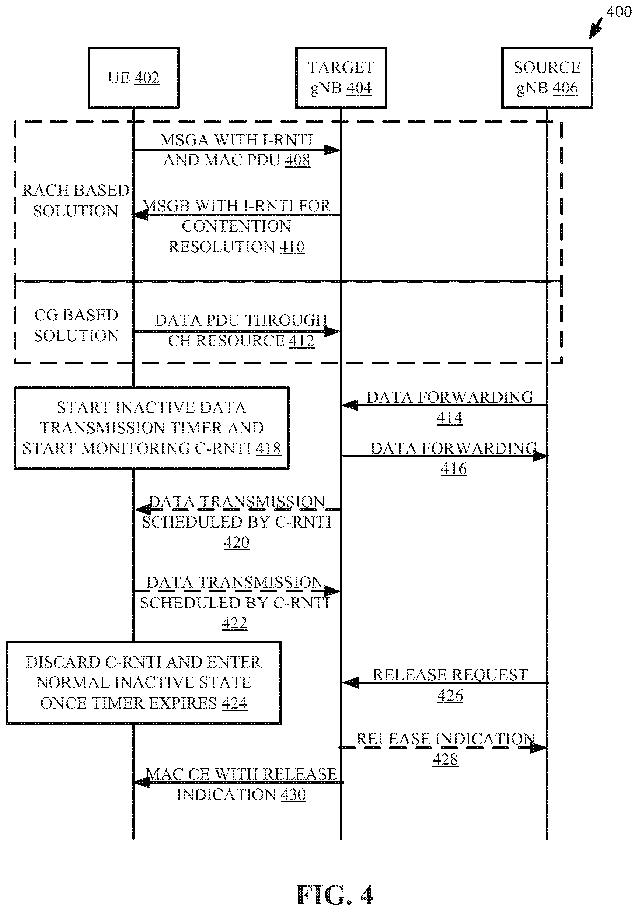

FIG. 4 is an example signaling process 400 of an example for inactive data transmission without RRC involved. As shown in FIG. 4, in step 408, in a RACH based solution, UE 402 can send MsgA with I-RNTI and MAC PDU to target gNB 404. In step 410, target gNB 404 can send MsgB with I-RNTI for contention resolution to UE 402. In step 412, for a CG based solution, the UE 402 can send a data PDU through CH resource to target gNB 404.

In step 414, the source gNB 406 can perform data forwarding to target gNB 404. The target gNB 404 can perform data forwarding in step 416 to source gNB 406. In step 418, the UE can start an inactive data transmission timer and start monitoring C-RNTI.

In step 420, the target gNB 404 can send data transmission scheduled by C-RNTI to UE 402. In step 422, the UE 402 can send data transmission scheduled by C-RNTI to target gNB 404. In step 424, the UE 402 can discard C-RNTI and enter a normal inactive state once a timer expires. In step 426, the source gNB 406 can send a release request to target gNB 404. In step 428, the target gNB 404 can send a release indication to source gNB 406. In step 430, the target gNB 404 can send MAC CE with release indication to UE 402.

### Example Embodiment 3 (not part of the invention)

A third example embodiment can relate to anchor relocation. For the INACTIVE data transmission with RRC involved, since control plane is involved, the anchor relocation can be supported. In a first alternative, the UE can fallback to a resume procedure where both the UE based solution and NW based solution can be considered. In a first alternative, an area scope can be configured to UE, and UE may only be allowed to initiate the INACTIVE data transmission within the area configured (e.g., configure the cells belonging to the same DU in the area scope). If we limit the INACTIVE data transmission to the cell where the UE enters INACTIVE state, then the area scope may not be needed.

In a second alternative, the UE can initiate the resume procedure with RRCResumeRequest, and it can be up to NW to determine whether to use INACTIVE data transmission or reconfigure the UE to RRC_CONNECTED state. In this procedure, the NW can configure the PDCP recovery/re-establishment procedure to trigger the retransmission of the PDCP PDU, which was transmitted together with the RRCResumeRequest message, if any.

In a second alternative, the target node can buffer the data received and process the data after the context fetch procedure. In this procedure, new RLC entity can be established accordingly, and the buffered data will be processed once the new RLC is established. The RLC configuration can be the same as the RLC configuration used in the source node.

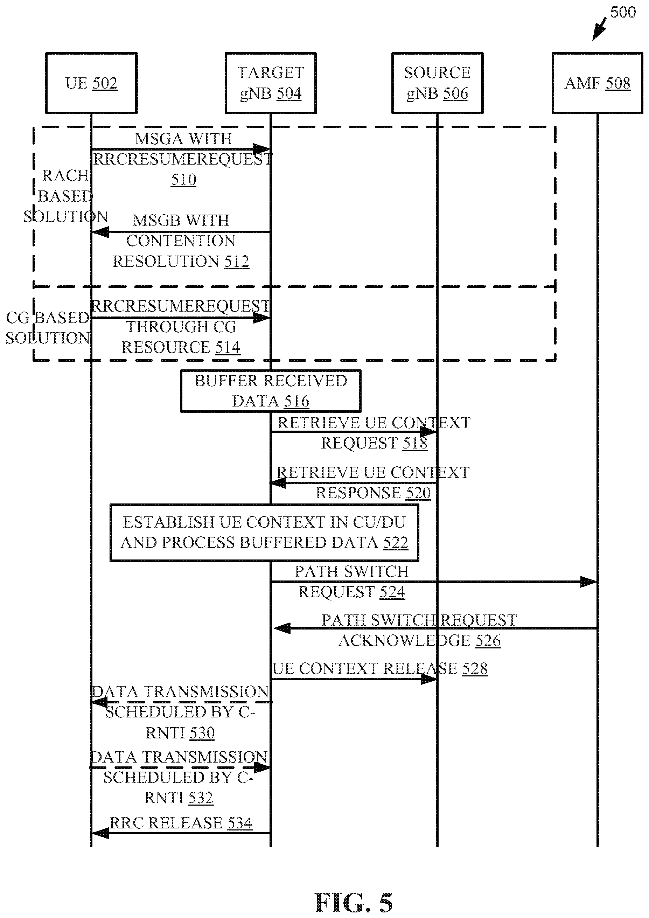

FIG. 5 is an example signaling process 500 for anchor relocation with data buffered in the target node. In step 510, in a RACH based solution, the UE 502 can send MsgA with RRC resume request to target gNB 504. In step 512, the target gNB 504 can send a MsgB with contention resolution to UE 502. In step 514, in a CG based solution, the UE 502 can send RRC resume Request through CG resource to the target gNB 504.

In step 516, the target gNB 504 can buffer received data. In step 518, the target gNB 504 can send a retrieve UE context request to source gNB 506. In step 520, the source gNB 506 can send a retrieve UE context response to target gNB 504. In step 522, the target gNB 504 can establish UE context in CU/DU and process the buffered data.

In step 524, the target gNB 504 can send a path switch request to the AMF 508. In step 526, the AMF 508 can send a path switch request acknowledge to the target gNB 504. In step 528, the target gNB 504 can send a UE context release 528 to source gNB 506. In step 530, the target gNB 504 can send a data transmission scheduled by C-RNTI to the UE 502. In step 532, the UE 502 can send a data transmission scheduled by C-RNTI to the target gNB 504. In step 534, the target gNB 504 can send an RRC release to the UE 502.

In a third alternative, data forwarding can be used instead of anchor relocation. In this procedure, the target node can forward both the RRCResumeRequest message and the data packet received to source node.

The source node can indicate whether the context relocation is needed or not. If the context relocation is not needed, then data forwarding may be performed instead. In a first alternative, new RLC entities can always be established in gNB (or in DU of gNB) for the INACTIVE data transmission, and default configuration can be used for the RLC entities established, where the default configuration may be specified in protocols, or broadcast in system information. Since both AM and UM RLC can be supported, alternatively, the target node may still need to know the RLC type of a configuration from source node, through the context retrieve process or based on the RLC type indication sent from UE (e.g., in UL MAC CE).

A second alternative can include identifying the RLC entity in gNB (or in CU of gNB), for the INACTIVE data transmission. A third alternative can include introducing the AM similar function in PDCP (e.g. polling based retransmission and status reporting).

The data packet can either be forwarded through Xn interface, or a GTP tunnel which can be established for the user plane data forwarding. If the data packet can be forwarded over Xn interface through XnAP message, then the target node can forward the data packet to source node directly, together with the resume request message. If GTP tunnel is used, then the tunnel can be either UE specific or cell specific (i.e. a common tunnel shared by all the UEs for INACTIVE data transmission).

Both the source node and target node can initiate the release of inactive data transmission. The target node can initiate release by sending a transmission end indication.

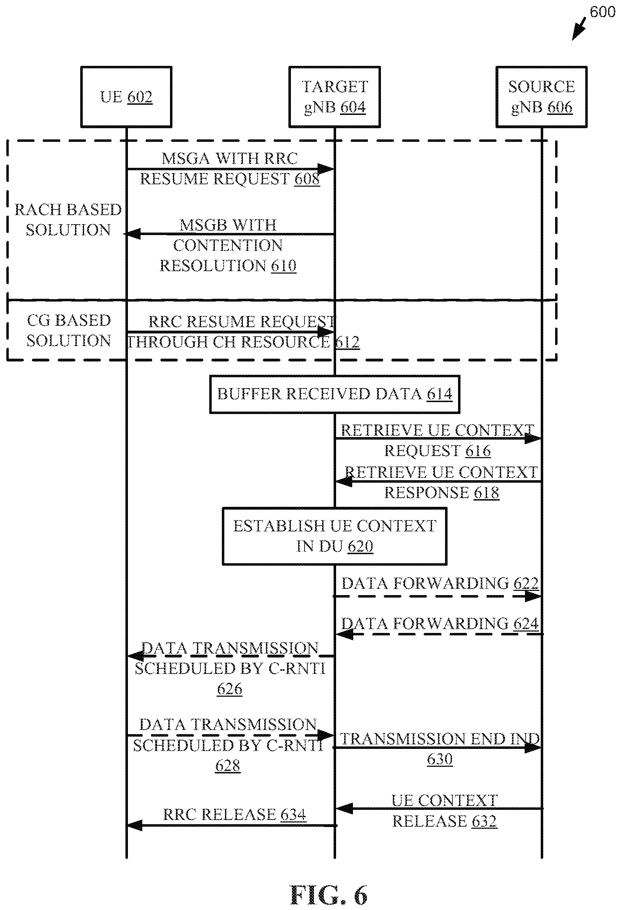

FIG. 6 is an example signaling process 600 for data forwarding used instead of anchor relocation. As shown in FIG. 6, in step 608 in a RACH based solution, UE 602 can send MsgA with RRC Resume Request to target gNB 604. In step 610, target gNB 604 can send MsgB with contention resolution to UE 602. In step 612, in a CG based solution, the UE 602 can send an RRC resume request through CG resource to target gNB 604.

In step 614, the target gNB 604 can buffer received data. In step 616, the target gNB 604 can send a retrieve UE context request to the source gNB 606. In step 618, the source gNB 606 can send a retrieve UE context response to the target 604. In step 620, the target gNB 604 can establish a UE context in DU. In step 622, the target gNB 604 can perform data forwarding to the source gNB 606. In step 624, the source gNB 606 can perform data forwarding to the target gNB 604.

In step 626, the target gNB 604 can send data transmission scheduled by C-RNTI to the UE 602. In step 628, the UE 602 can send a data transmission scheduled by the C-RNTI to the target gNB 604. In step 630, the target gNB 604 can send a transmission end indication to the source gNB 606. In step 632, the source gNB 606 can send a UE context release to the target gNB 604. In step 634, the target gNB 604 can send an RRC release to the UE 602.

### Example Embodiment 4 (not part of the invention)

A fourth example embodiment may relate to transmission type selection. In the procedure part, the RACH based solution and CG based solution may be discussed. Also taking the legacy RRC resume procedure into account, whenever the UE has data available in the buffer, the UE may need to determine the transmission type including any of a RACH based solution, CG based solution, a legacy RRC resume procedure, an RRC involved procedure, and/or a procedure without RRC involved.

For the transmission type selection, any of the following cases can be considered. Initial transmission type selection, which can be performed by UE whenever the UE determine to initiate data transmission based on the detection of UL data arrival. Transmission type switch, which may happen during the INACTIVE data transmission, whenever the UE or NW determine the criteria for INACTIVE data transmission is no longer satisfied, and the UE will be switched to CONECTED mode and perform normal UL transmission.

A first procedure can include an initial transmission type selection.

For the initial transmission type selection, any of whether the INACTIVE data transmission is allowed in the cell, whether the INACTIVE data transmission is applicable to the on-going services, and/or if both procedures with/without RRC involved are supported, which one should be used, can be considered.

A second procedure can include whether the INACTIVE data transmission is allowed in one cell. The UE can determine whether the INACTIVE data transmission is allowed (and/or which type of inactive data transmission is allowed) in the cell by either indication from system information or dedicated signaling. And the following alternative can be considered:
A first alternative can include an indicator in system information. One or multiple indicator can be included in system information to indicate whether the "Data transmission in inactive state" is allowed in the cell. And the UE may only initiate the "Data transmission in in inactive state," if the indicator set to true.

The indicator can be introduced in the system information. The indicator can be given per cell, per PLMN or per RAN notification area. There can be multiple indicators, and each indicator is associated to one transmission type.

A second alternative can include an indicator in dedicated signaling. One (e.g. per UE) and/or multiple indicator (e.g. per transmission type) can be included in dedicated RRC signaling to indicate whether the "Data transmission in inactive state" is allowed for the UE.

The indicator can be introduced in the dedicated RRC signaling. There can be multiple indicators, and each indicator is associated to one transmission type.

In a third alternative, an area scope can be configured in dedicated signaling. An area scope can be configured to UE through dedicate signaling, and the "Data transmission in inactive" (e.g. the area scope is configured per UE) or one specific type of inactive data transmission (e.g. the area scope is configured per transmission type) may only be allowed within the area scope configured. The area scope can be one cell or a list of cells, one RNA or a list of RNAs. The dedicate RRC message can be the signaling which is used to push the UE to the inactive efficient state, or the dedicate RRC message before the UE enter the inactive state. The RRC message can be either the RRC reconfiguration or RRC release.

An area scope can be introduced in RRC signaling. The area scope can be per UE or per transmission type.

In a fourth alternative, per cell indicator in RAN notification area. The area scope of RAN notification area can be given by a cell list. And for each cell in the cell list for RAN notification area, one (e.g. per UE) or multiple indicators (per transmission type) can be introduced to indicate whether the "Data transmission in inactive state" is allowed in that cell. One or multiple indicator can be introduced in the cell information of the cell list which can be used to configure the area scope of RAN notification area. The indicator can be used to indicate whether the "Data transmission in inactive state" is allowed in that cell.

A fifth alternative can be based on the resource configuration. The inactive data transmission may only be allowed if the configuration and/or resource is configured in the cell. The resource and/or configuration can be provided by either system information or dedicated RRC message. In addition, besides the resource configuration, some kind of validation rule can be defined as well. One specific type of inactive data transmission can only be allowed if there is valid resource for the transmission type. For example, the CG based solution can only be used if there is valid PUSCH configuration in the cell and there is valid TA maintained on UE side.

For the indicator mentioned above, the indicator can be either an explicit indicator or implicit indicator. For the implicit indicator, the implicit indicator can be deduced by the resource configured for the inactive transmission (e.g. once the resource for one specific transmission type is configured, the UE can consider the transmission type is supported and/or allowed).

A first example can include one indicator is broadcasted in system information to indicate whether the inactive data transmission is allowed in the cell. One indicator can be configured to UE to indicate whether the inactive data transmission is allowed for the UE.

With the two indicators, the UE can only initiate the inactive data transmission in case the inactive data transmission is allowed in the cell according to the indication in system information and also the inactive data transmission is allowed by the UE according to the indication configured in dedicated signaling.

A second example can include, if there is valid CG resource configured, the UE can select the CG resource; otherwise, if RACH based inactive data transmission is allowed, the UE should initiate the RACH procedure.

In this example, whether the CG is valid or not is determined can be based on any of if there is CG resource configured and/or stored, valid CG resource can be found on the qualified beam (e.g. valid CG resource can be found on the SSB with quality above on a pre-configured threshold, where the threshold can be configured in either system information or in dedicated signaling), the CG resource configured and/or stored is allowed to be used for inactive transmission, there is valid TA maintained on UE side (e.g. the TAT is running on UE side), and/or whether the INACTIVE data transmission is applicable to the on-going services.

Even if the INACTIVE data transmission can be supported/allowed in one cell, the on-going services shall be taken into account as well in the transmission type selection, and the following information can be considered.

The buffer size of the data on the UE side. To enable this, one buffer size threshold can be configured to UE in either the system information or in dedicated signaling. The buffer size threshold can be given per UE or per logical channel, or per logical channel group or the sum of buffer size for the LCH (logical channel) or LCG (logical channel group) for which the inactive data transmission is allowed. Once the buffer on UE side is less (less or equal) than the threshold, the UE is allowed to initiate the "Data transmission in RRC_INACTIVE," otherwise, the UE should initiate the legacy RRC resume procedure (e.g. state transition first). For the case that the buffer size is defined per logical channel or logical channel group, if the buffer is not included for one logical channel or logical channel group, the data buffered in such logical channel or logical channel group will initiate the legacy RRC resume procedure (e.g. data transmission with state transition, the UE or NW will trigger the state transition procedure directly and the UE can send the RRC setup request or RRC resume request message to NW to initiate the state transition). In one alternative, for the case that the buffer size is not configured, then the "Data transmission in RRC_INACTIVE" is not allowed and the UE can always initiate the state transition first. In one alternative, the buffer size can be configured in both dedicated signaling and system information. If the buffer size is configured in dedicated signaling, then the UE can use the value configured in dedicated signaling; otherwise, the UE will use the value configured in system information.

The Logical channel ID (or DRB ID, QoS flow ID, PDU session ID) for which the data is available in the buffer.

To enable this, one indicator per logical channel or per logical channel group (e.g. the indicator may be used to indicate whether the data transmission without state transition is allowed for this logical channel or logical channel group) or a bitmap for logical channels or logical channel groups (e.g. the bitmap is used to indicate which logical channels or logical channel groups are allowed for the data transmission without state transition) can be configured to UE in dedicated signaling. With the indicator, once there is data buffered on UE side and all (or any) the logical channel/logical channel group with data buffered is allowed to initiate the "Data transmission in RRC_INACTIVE," the UE is allowed initiate the "Data transmission in RRC_INACTIVE." This indicator can be modeling as part of the LCP parameters.

Based on the combination of logical channel and buffer size, a new rule can be deduced that the total buffer size of the logical channel or logical channel groups, for which the data transmission without state transition is allowed.

Based on network configuration. In this option, the network can include an explicit indication in the suspend Configuration whether the UE is allowed to use INACTIVE data transmission or not.

In an initial transmission type selection approach, for the transmission type selection, any of a UE based solution or a NW based solution can be considered. In a UE based solution, the UE can select the transmission type directly, and determine whether data packet can be included in the Msg3/MsgA. In a NW based solution, the UE can include the RRC message, which may trigger the state transition, in payload of RACH procedure or in CG resource, and it may be up to NW to determine whether to initiate the state transition or allow the UE to perform data transmission in INACTIVE mode or not, To assist the determination on NW side, the UE may include some assistant information on in either the RRC message or the MAC CE or MAC header(or subheader) in payload of MAC PDU in Msg3/MsgA or MAC PDU in CG resource. For example, either the BSR or one INACTIVE data transmission indication (which will be used to indicate whether the criteria for INACTIVE data transmission is satisfied or not) can be sent to NW.

For a transmission type switch, if the CG based solution is initiated or if CG based data transmission is configured, the UE can initiate RACH procedure when (in any of the following cases) the TA maintained on UE side is not valid (e.g. TAT expired), the UE may not receive the DL grant (or UL grant or PDCCH addressed to C-RNTI) within a period of time or within a number of PDCCH occasion, where the timer (for the period of time) and/or counter (for the number of PDCCH occasion) can be configured in either system information or dedicated signaling e.g. RRC reconfiguration message or RRC release message before or when the UE entering INACTIVE state, and/or when no qualified beam (e.g. SSB or CSI-RS) with CG resource can be found, and/or the change of best beam or the change of qualified beam is changed, and/or the beam used in the current transmissions is no longer valid (e.g., below a threshold which can be configured in either system information or dedicated signaling before or when the UE entering INACTIVE state).

### Example Embodiment 5 (not part of the invention)

Example Embodiment 5 can relate to beam mobility. Beam mobility can refer to the change of beam during the inactive data transmission, where the beam refers to SSB or CSI-RS.

For the beam mobility, whenever the beam change is detected during the IDT (inactive data transmission), the UE may perform one of initiating a RACH procedure; if there is stored and/or configured CG resource associated with the new beam, the UE can use the CG resource for transmission; and/or generated and/or include the beam measurement result information in MAC CE or PHY layer signaling (e.g. UCI).

The beam change detection can be based on any of a change of beam (e.g. SSB), the quality of source beam (or current serving beam) above a threshold, the quality of serving beam (or current serving beam) below a threshold, and/or the quality of target beam is above a threshold and the quality of source (or current serving beam) beam below a threshold. The beam can be either SSB or CSI-RS.

In some embodiments, a time to trigger will be considered in the evaluation as well, in which case the event will be considered as triggered only in case the criteria of the event is satisfied for a period of time, and the period of time will be controlled by a timer (e.g. time to trigger).

In some embodiments, if CG resource for inactive data transmission is configured, in case the beam change is detected or the quality of current serving beam below a threshold, the UE can: if there is any available CG resource associated with available beam (e.g. quality above a threshold), the UE use the CG resource associated to the available beam. If there is no available CG resource can be found, which is associated to an available beam, the UE can initiate a RACH procedure.

In some embodiments, the UE can include the beam measurement information to NW by MAC CE or PHY layer signaling (e.g. UCI). In some embodiments, the NW can configure one or multiple search space and/or CORESET for inactive state, and different search space and/or CORESET can be associated to different beam.

In some embodiments, the UE can be configured with one or multiple search space and/or CORESET for inactive state, and different search space and/or CORESET can be associated to different beam. The UE can determine the DL and/or UL beam based on the search space and/or CORESET of PDCCH reserved. In some alternative, the UE can determine which search space/CORESET should be used based on the serving beam selected.

### Example Embodiment 6 (not part of the invention)

Example Embodiment 6 can relate to measurement during INACTIVE data transmission. For the measurement gap, the two alternatives can be considered. A first alternative can include the measurement gap is not used for the INACTIVE data transmission, or the measurement is up to UE implementation (e.g. autonomous is used by UE implementation).

A second alternative can include the measurement gap can be used for INACTIVE data transmission, and the measurement gap is configured to the UE before or when the UE entering INACTIVE state with dedicated signaling. For example, the measurement gap for inactive data transmission can be configured to UE with RRC reconfiguration message before the UE enter inactive state; or the measurement gap for inactive data transmission can be configured to UE with RRC release message which will be used configure the UE to inactive state;

In a third alternative, a measurement gap will be used for INACTIVE data transmission, and the configuration of measurement gap will be broadcasted in system information. Optionally, with the measurement gap configuration in system information, the UE will determine the location of measurement gap with both the measurement gap configuration in system information and the UE ID, where the UE ID can be either the I-RNTI or C-RNTI. For example, the UE determine the gapOffset of the measurement gap by: UE ID mod parameter A or (UE id mod parameter A/B)*parameter B or (UE id mod parameter A/B)*parameter B, where the parameter A, B can be either configurable parameters configured in SIB (e.g. the parameter A can be the measurement gap repetition period, parameter B can be measurement gap length), in dedicated signaling or constant specified in specs. As another alternative, one separate parameter C can be used instead of the UE ID, and the parameter C can be configured by dedicated signaling before or when the UE entering inactive state.

### Example Embodiment 7 (not part of the invention)

Example Embodiment 7 can relate to cell re-selection during IDT. During the IDT, the UE can continue the cell reselection evaluation. And the UE can perform the following operations (at least one of the following actions), once the cell reselection is performed or once the conditions for cell re-selection are fulfilled, or once the UE initiate IDT in the target cell reselected, or once the UE initiate the resume procedure in the target cell reselected.

A first action can include suspending the DRB. A second action can include stopping the inactive data transmission. A third action can include considering the inactive data transmission timer expired, or considering the TAT expired. A fourth action can include release the CG resource configured or consider the CG resource not available or release the C-RNTI.

A fifth action can include, for transmitting PDCP entity, keep TX_NEXT (i.e. do not set TX_NEXT to the initial value). A sixth action can include, for receiving PDCP entity, keep the RX_NEXT and RX_DELIV (i.e. do not set RX_NEXT and RX_DELIV to the initial value).

A seventh action can include re-establish and/or release the RLC entities for DRB and/or SRB. An eighth action can include perform PDCP recovery or PDCP re-establishment for DRB. A ninth action can include perform PDCP re-establishment for SRB. In an alternative, if IDT is initiated in target cell reselected, then the PDCP recovery or PDCP re-establishment can be triggered; if legacy resume procedure is initiated in target cell reselected, then a PDCP suspend operation can be triggered.

In some embodiments, the actions above (e.g. action 1/5/6) may only be needed for the DRB, for which the inactive data transmission is allowed. In some embodiment, the above actions can be performed when the cell re-selection is performed. In some embodiment, the above actions can be performed when the UE initiate the inactive data transmission or RRC resume procedure in the target cell. In some embodiments, if cell reselection occurred or the criteria for cell re-selection is satisfied during inactive data transmission, the UE can initiate RRC re-establishment procedure in the target cell.

### Example Embodiment 8 (not part of the invention)

Example Embodiment 8 can relate to failure handling. Once the failure is detected during inactive data transmission, the following action can be considered. A first alternative can include the UE initiating normal resume procedure. A second alternative can include the UE prioritizing current serving cell in cell re-selection. A third alternative can include the UE initiating RRC re-establishment procedure (e.g. if CG transmission failure is detected or RLC failure is detected). A fourth alternative can include the UE initiating RACH procedure. (e.g. if CG transmission failure is detected or RLC failure is detected, or if beam failure is detected, the UE should initiate RACH procedure). A fifth alternative can include the UE entering IDLE state (e.g. if RACH failure is detected, or the T319 expired, or out of coverage is detected).

For the failure detection, any of the following failures can be considered: RLC failure, RACH failure, CG transmission failure, detection of Out of coverage, expiration of T319, and/or Beam failure. For the RLC failure, RACH failure, out of coverage and beam failure, the failure detection defined for CONNECTED state can be reused for inactive state.

For the failure detection (e.g. detection of RLC failure, detection of beam failure, etc), inactive state specific failure detection parameters (parameters which will be used to configure the failure detection. And these parameters used in inactive state can be different from the parameters used in CONNECTED mode) can be configured when or before the UE entering inactive state. For example, these failure detection parameters can be configured with system information or RRC reconfiguration message before UE entering inactive state or with RRC release message, which will be used to configure UE to inactive state.

In some alternatives, the parameters for failure detection can be configured in both system information and dedicated signaling, and parameters configured in dedicated signaling will have higher priority than the parameters configured in system information (e.g., the parameters configured in dedicated signaling will be used if both configured). In some alternatives, the parameters for failure detection can be configured in both system information and dedicated signaling, and parameters configured in dedicated signaling will have lower priority than the parameters configured in system information (e.g., the parameters configured in system information will be used if both configured).

For the CG transmission failure, the failure can be defined as no PDCCH address to C-RNTI, or UL/DL grant is received before the timer expiration or after N PDCCH occasions. The timer and/or the counter (counter for the number of PDCCH occasion) can be started when or after the initial transmission through CG resource.

In some alternatives, in case failure is detected on UE side, if the UE has a valid C-RNTI (or I-RNTI), then UE can perform RRC re-establishment procedure. In some alternatives, in case failure is detected on UE side, if UE may not have valid C-RNTI (and/or I-RNTI), then UE can enter IDLE state.

### Example Embodiment 9 (not part of the invention)

Example Embodiment 9 can relate to resource configuration. For the RACH resource configuration, the RACH resource for inactive data transmission can be configured to UE with system information and/or dedicated signaling. The following resources can be configured for inactive data transmission: inactive data transmission specific PRACH resource, inactive data transmission specific MsgA PUSCH resource pool, inactive data transmission specific CORESET/Search Space for Msg2 and/or MsgB reception, PDCCH resource, PUCCH resource, SRS resource, BWP configuration for inactive data transmission (e.g. the BWP used for inactive data transmission can be other than initial BWP), DRX configuration used during INACTIVE data transmission, RLC and/or MAC configuration used during INACTIVE data transmission, other physical layer configuration (other physical layer configuration which can not be covered above) used in during INACTIVE data transmission, and/or bandwidth (e.g. channel bandwidth, or cell bandwidth) used for inactive data transmission. In some embodiments, a timer (e.g., length of timer) can be configured to UE to indicate the validity time duration of the inactive data transmission specific resource. The timer can be started once the message is received or the UE enter inactive state. And the inactive data transmission resource configured by dedicated signaling (e.g. CG resource, C-RNTI) can be removed on UE side, once the timer expired. In some embodiments, in case the UE initiate IDT in one cell, which is different from the cell where the inactive data transmission specific resource is configured, then the inactive data transmission specific resource configured by dedicated signaling (e.g. CG resource, C-RNTI) can be removed. In some embodiments, in case the UE re-select to a cell, which is different from the cell where the inactive data transmission specific resource is configured, the inactive data transmission specific resource configured by dedicated signaling (e.g. CG resource, C-RNTI) can be removed. In some embodiment, if SCG is configured (e.g. in LTE-DC, EN-DC, MR-DC, NR-DC and/or multiple connectivity case) the configuration for inactive data transmission can be provided for MCG (mast cell group) and/or SCG (secondary cell group). If the inactive data transmission is provided to SCG, then the inactive data transmission will be applied in SCG. The present embodiments in this application can be applicable to MCG and/or SCG.

For the resource configuration with dedicated signaling, the configuration can be provided in RRC reconfiguration message or RRC release message, before or when the UE entering inactive state.

For the resource configuration with dedicated signaling, besides the resource configuration listed above, the contention free RACH resource can be configured to UE as well. The contention free RACH resource can be either the 2-step RACH contention free resource or 4-step RACH contention free resource. In some embodiment, a timer (e.g. length of timer) can be configured to UE to indicate the validity time duration of the CFRA resource (e.g. the CFRA resource will be released or be considered as invalid once the timer expired). The timer can be started once the message is received or the UE enter inactive state.

For the configured grant resource, the following aspect can be considered: One or multiple CG resource for inactive data transmission can be configured. In some embodiments, if there are CG resource configured in connected state, the NW can indicate in signaling (e.g. by ConfiguredGrantConfigIndex) which CG resource can be used in inactive state.

An area scope can be configured for CG resource, and the CG resource can only be used within the area scope. In some embodiment, the area scope is a cell or a list of cells or an RNA (RAN notification area) or a list of RNA, or a TA or a list of TA. In some embodiment, the area scope is limited to the cell where the UE enter inactive state, in which case no explicit configuration is needed.

Different CG resources can be configured for different beam, where the beam can be SSB and/or CSI-RS. Different CG resources can be configured for different DRB. In some embodiment, for each DRB or each LCH or each PDCP or each RLC, a CG resource id (e.g. ConfiguredGrantConfigIndex) or a list of CG resource id can be configured, and only the DRB (LCH/PDCP/RLC) configured with CG resource ID can perform the inactive data transmission with CG resource.

A TAT timer for inactive state can be configured. In some embodiments, the length of TAT timer used in inactive state can be different from the length of TAT timer used in connected state. In some embodiment, if the TAT timer for inactive state is absent, the UE can use the length of TAT timer used in connected mode. In some embodiments, if the length of TAT timer for inactive state is configured in both system information and dedicated signaling, the UE can use the value configured in dedicated signaling. In some embodiments, if the length of TAT timer for inactive state is configured in both system signaling and dedicated signaling, the UE can use the value configured in system information signaling.

A duration timer for the availability of CG resource in inactive state can be configured. And the CG resource can be considered as valid before the timer expiration. The timer can be configured per UE or per CG. The timer can be started once the message is received or the UE enter inactive state. The length of timer can be configured in dedicated signaling (e.g. RRC reconfiguration message or RRC release message before or when the UE entering inactive state).

Other resource for transmission/reception in INACTIVE state. The resource may include C-RNTI, I-RNTI, Searchspace, CORESET, SRS resource, PUCCH resource, PUSCH resource, and/or BWP configuration for inactive data transmission. The resource mentioned above can be the same with the resource used for connected state or can be different from the resource used for connected state (i.e. resource specific for inactive state). In some embodiments, the UE can use the resource once the inactive data transmission is initiated. In some embodiments, the UE can use the resource once the RRC resume message is received and the UE is configured to perform the inactive data transmission.

The configurations above can be provided in either dedicated signaling (e.g. UE specific resource configuration) or system information (cell specific resource configuration). The configurations above can be configured to UE with RRC message RRC reconfiguration or RRC release before or when the UE entering inactive state.

In some embodiments, the CG resource is configured and broadcasted through system information, and UE can select one resource or a subset of the resource broadcasted for INACTIVE data transmission based on the configuration received in system information. In some embodiments, multiple set of CG resource can be configured in system information, and the UE will select the CG resource configured based on the QoS requirement, UE ID (C-RNTI or I-RNTI), Slice, access category or access type.

In some embodiments, the common CG configuration broadcasted in system information can coexistent with the dedicated CG configuration configured in dedicated signaling. In case dedicated CG configuration is provided, the UE should use the dedicated CG configuration, otherwise the common CG configuration can be used instead.

The exchange of the resource configuration for inactive data transmission between two network node can be supported. The exchange can be performed over X2 or Xn interface (or further interface between two RAN access node). The resource configuration can be included in either inter-node message or X2AP/XnAP signaling.

For the access control, separate access control parameters can be configured for inactive data transmission (e.g. different parameters can be configured for initial access and inactive data transmission).

For the RACH resource and/or CG resource mentioned above, different resource configuration can be configured for different NW slice and/or CAG and/or NPN, and/or different access category and/or different access type.

For the RACH resource and/or CG resource mentioned above, different resource configuration can be configured for IDLE or INACTIVE state.

Parameters for transmission type selection can be configured in system information and/or dedicated RRC message (RRC reconfiguration message or RRC release message). In some embodiments, if the parameters for transmission types is configured with dedicated signaling, the UE can ignore the parameters configured in system information.

The following parameters for transmission type selection can be considered: RSRP threshold for inactive data transmission. In some embodiments, the UE can initiate the inactive data transmission only in case the cell RSRP is above (or "equal or above") than the RSRP threshold. In some embodiments, the UE is only allowed to select a certain transmission type for inactive data transmission in case the cell RSRP is above (or "equal or above") the RSRP threshold (in this case, the RSRP threshold is configured per transmission type).

Pathloss threshold for inactive data transmission. In some embodiments, the UE can initiate the inactive data transmission only in case the pathloss is less (or "equal or less") than the Pathloss threshold. **In** some embodiment, the UE is only allowed to select a certain transmission type for inactive data transmission in case the cell Pathloss is less (or "equal or less") than the Pathloss threshold (in this case, the RSRP threshold is configured per transmission type).

Buffer size threshold for inactive data transmission. In some embodiment, the UE is only allowed to initiate inactive data transmission only in case the buffer size is less (or "equal or less") then the buffer size threshold.

The buffer size can be the overall buffer size per UE, overall buffer size for the DRB/LCH of one UE, for which the inactive data transmission is allowed, and/or the buffer size for one DRB orLCH or LCG.

### Example Embodiment 10 (not part of the invention)

Example Embodiment 10 can relate to security handling. For the security handling during inactive data transmission, the following alternatives can be considered. A first alternative can include the old security configuration can be used during the inactive data transmission.

A second alternative can include the old security configuration can be used for the security protection of first message or the RRC resume message. And the new security configuration can be used in the following transmission (e.g. new security configuration will be used once the RRC resume request message is generated or transmitted).

A third alternative can include new security configuration can always be used. The old security configuration can refer to the security configuration used before UE entering inactive state. The new security configuration can refer to the security configuration derived based on the security configuration configured in RRC release message (which will be used to configure the UE to inactive state).

The security configuration may include the security key and/or security algorithm. In some embodiments, the UE can perform horizontal key derivation if inactive data transmission is configured or inactive data transmission is performed or initiated. In some embodiments, the UE can perform either vertical key derivation or horizontal key derivation based on the configuration from NW side. The configuration can be provided to UE in dedicated RRC signaling (e.g. RRC reconfiguration and/or RRC release). In some embodiment, the UE can determine type of key derivation based on the type of inactive data transmission selected. For example, if inactive data transmission without RRC involved is selected, the UE may always perform horizontal key derivation.

### Example Embodiment 11 (not part of the invention)

Example Embodiment 11 can relate to an impact on the user plane. In some embodiments, if RRC release message is received and the inactive data transmission is configured and/or allowed based on the RRC release message received, and/or CG resource for inactive data transmission is configured, the UE can, for the DRB and/or PDCP, for which the inactive data transmission is not supported: For transmitting PDCP entity set TX_NEXT to the initial value and/or discard all stored PDCP PDUs. For receiving PDCP entity, if t-Reordering is running: stop and reset t-Reordering, deliver all stored PDCP SDUs to the upper layers in ascending order of associated COUNT values after performing header decompression, set RX_NEXT and RX_DELIV to the initial value.

For the DRB and/or PDCP, for which the inactive data transmission is supported, in a first alternative, do not perform PDCP suspend operation, and no special operation is needed in PDCP. In a second alternative, suspend a DRB. In a third alternative, perform PDCP recovery or perform PDCP re-establishment. In a fourth alternative, for PDCP. For transmitting PDCP entity, it can keep TX_NEXT (i.e. do not set TX_NEXT to the initial value). For receiving PDCP entity, it can keep the RX_NEXT and RX_DELIV (i.e. do not set RX_NEXT and RX_DELIV to the initial value).

In some embodiments, If RRC release message is received and the inactive data transmission is configured and/or allowed based on the RRC release message received, and/or CG resource for inactive data transmission is configured, the UE can, for each DRB, do not perform PDCP suspend operation, and no special operation is needed in PDCP, suspend DRB, perform PDCP recovery or perform PDCP re-establishment, and/or for PDCP.

For transmitting PDCP entity, it can keep TX_NEXT (i.e. do not set TX_NEXT to the initial value). For receiving PDCP entity, it can keep the RX_NEXT and RX_DELIV (i.e. do not set RX_NEXT and RX_DELIV to the initial value).

In some embodiments, If "the inactive data transmission is configured and/or allowed based on the RRC release message received," and/or "CG resource for inactive data transmission is configured," and "if the UE determine to initiate the normal RRC resume procedure," or "the cell where the UE initiate the RRC resume procedure does not support or allow the inactive data transmission," before or when the UE initiate the RRC resume procedure, the UE can perform PDCP suspend for each DRB.

In some embodiments, if the UE determine to initiate the inactive data transmission or if the inactive data transmission is configured and/or allowed in the cell, before or when the UE initiate the RRC resume procedure, the UE can perform PDCP re-establishment procedure for each DRB, perform PDCP re-establishment procedure for each DRB, for which the inactive data transmission is allowed, perform PDCP recovery procedure for each DRB, and/or perform PDCP recovery procedure for each DRB, for which the inactive data transmission is allowed.

In some embodiment, if the IDT is allowed, then the UE may not perform PDCP suspend operation; otherwise, the UE can perform PDCP suspend operation.

In some embodiments, if the UE determines to initiate the inactive data transmission or if the inactive data transmission is configured and/or allowed in the cell, before or when the UE initiate the RRC resume procedure, the UE can re-establish RLC entity (or entities) for each RLC or LCH or DRB and/or re-establish RLC entity (or entities) for each RLC or LCH or DRB, for which the inactive data transmission is allowed. The re-establish RLC can be replaced by release/addition or establish of RLC entity.

For the re-establish RLC entity (or release/addition or establish RLC entity), the default configuration should be used, reuse the configuration which is used before the UE entering inactive state, or use the configuration configured for inactive data transmission, and the configuration can be provided to UE by RRC reconfiguration message or RRC release message, before or when the UE entering inactive state.

In some embodiments, if CG resource for inactive data transmission is configured, or if TAT for inactive is configured or if inactive data transmission is configured/allowed, the UE can maintain the TAT (timeAlignmentTimer) timer in inactive state.

In some embodiments, if the TAT is expired in inactive state, the UE can release or clear any configured downlink assignments and/or CG resource.

### Example Method for Data Transmission in a Power Efficient State

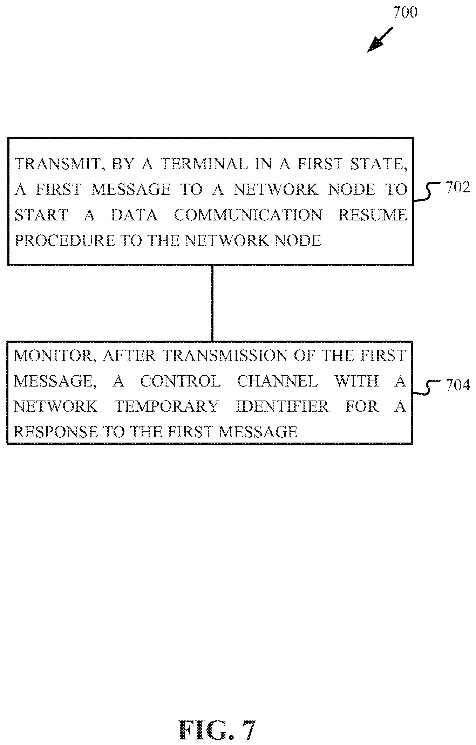

FIG. 7 is a block diagram 700 of an example method for data transmission in a power efficient state. The method includes transmitting, by a terminal in a first state, a first message to a network node to start a data communication resume procedure to the network node (block 702). The first state includes a power-efficient state, namely an inactive state, as described herein.

The method also includes monitoring, after transmission of the first message, a control channel with a network temporary identifier for a response to the first message (block 704). The terminal, in the first state, can limit use of radio resources by the network node. The network temporary identifier is a cell radio network temporary identifier (C-RNTI) as described herein.

### Example Wireless System

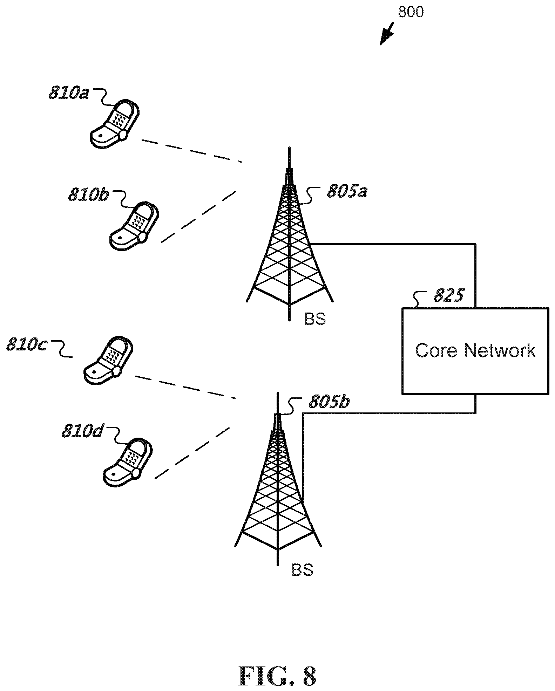

FIG. 8 shows an example of a wireless communication system where techniques in accordance with one or more embodiments of the present technology can be applied. A wireless communication system 800 can include one or more base stations (BSs) 805a, 805b, one or more wireless devices or terminals 810a, 810b, 810c, 810d, and a core network 825. A base station 805a, 805b can provide wireless service to wireless devices 810a, 810b, 810c and 810d in one or more wireless sectors. In some implementations, a base station 805a, 805b includes directional antennas to produce two or more directional beams to provide wireless coverage in different sectors. The base station may implement functionalities of a scheduling cell or a candidate cell, as described in the present document.

The core network 825 can communicate with one or more base stations 805a, 805b. The core network 825 provides connectivity with other wireless communication systems and wired communication systems. The core network may include one or more service subscription databases to store information related to the subscribed wireless devices 810a, 810b, 810c, and 810d. A first base station 805a can provide wireless service based on a first radio access technology, whereas a second base station 805b can provide wireless service based on a second radio access technology. The base stations 805a and 805b may be co-located or may be separately installed in the field according to the deployment scenario. The wireless devices 810a, 810b, 810c, and 810d can support multiple different radio access technologies.

In some implementations, a wireless communication system can include multiple networks using different wireless technologies. A dual-mode or multi-mode wireless device includes two or more wireless technologies that could be used to connect to different wireless networks.

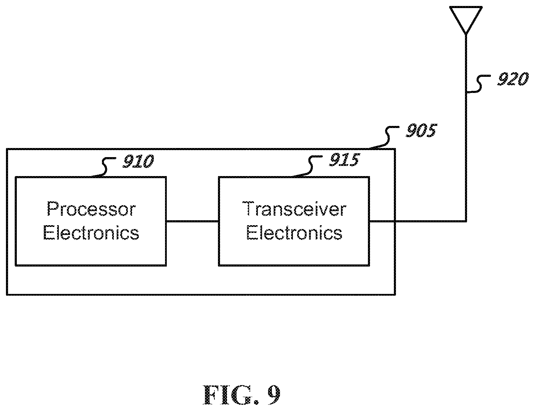

FIG. 9 is a block diagram representation of a portion of a hardware platform. A hardware platform 905 such as a network node or a base station or a terminal or a wireless device (or UE) can include processor electronics 910 such as a microprocessor that implements one or more of the techniques presented in this document. The hardware platform 905 can include transceiver electronics 915 to send and/or receive wired or wireless signals over one or more communication interfaces such as antenna 920 or a wireline interface. The hardware platform 905 can implement other communication interfaces with defined protocols for transmitting and receiving data. The hardware platform 905 can include one or more memories (not explicitly shown) configured to store information such as data and/or instructions. In some implementations, the processor electronics 910 can include at least a portion of the transceiver electronics 915. In some embodiments, at least some of the disclosed techniques, modules or functions are implemented using the hardware platform 905.

### Conclusion

From the foregoing, it will be appreciated that several techniques are described to allow a wireless device to perform data transmissions while in a power efficient state such as the firs state described with respect to FIG. 700 in which the base station or a network device limits the use or radio resources by a wireless device. For example, in the power efficient state, the wireless device may not be provided unicast IP layer data transmission or reception opportunities by the network device. Specific embodiments of the presently disclosed technology have been described herein for purposes of illustration, but that various modifications may be made without deviating from the scope of the invention. Accordingly, the presently disclosed technology is not limited except as by the appended claims.

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

Only a few implementations and examples are described, and other implementations, enhancements and variations can be made based on what is described and illustrated in this patent document.

## Claims

1. A method for wireless communication, comprising:
transmitting (106B; 210; 702), by a terminal (810) in a first state, a first message to a network node (805) to start a data communication resume procedure to the network node, wherein the first message is a radio resource control, RRC, resume request message that is transmitted through a configured grant resource; and
monitoring (704), after transmission of the first message, a control channel with a network temporary identifier for a response to the first message, wherein the network temporary identifier is a cell radio network temporary identifier, C-RNTI,
the method **characterized in that** the C-RNTI is configured when the terminal (810) entered an inactive state in response to receiving a radio resource control release message.

2. The method of claim 1, wherein the first message is transmitted by including a data protocol data unit, PDU, and/or a medium access control, MAC, service data unit, SDU packet.

3. The method of claim 1, further comprising:
receiving (110; 216), by the terminal (810), a first data transmission scheduled by the monitored network temporary identifier from the network node; and
transmitting (112; 218), by the terminal (810), a second data transmission scheduled by the monitored network temporary identifier to the network node.

4. The method of claim 1, further comprising:
receiving (114), by the terminal (810), an RRC release message from the network node; and responsive to receiving the RRC release message, stopping, by the terminal, monitoring control channel with the network temporary identifier configured for the terminal and discarding the network temporary identifier.

5. The method of claim 4, further comprising:
initiating (214), by the terminal (810), a first timer responsive to receiving the response to the first message, wherein the terminal (810) monitors the control channel with the network temporary identifier configured for the terminal (810) responsive to initiating an inactive data transmission timer;
receiving, by the terminal (810), PDCCH scheduling information with a C-RNTI; and
responsive to receiving the PDCCH scheduling information with the C-RNTI, restarting, by the terminal (810), the inactive data transmission timer,
detecting (220), by the terminal (810), an expiry of the inactive data transmission timer; and responsive to detecting the expiry of the inactive data transmission timer, performing, by the terminal, any of stopping monitoring of the control channel with the network temporary identifier configured for the terminal, discarding the network temporary identifier, and/or suspending a dedicated radio bearer, DRB, and/or a packet data convergence protocol, PDCP.

6. The method of claim 5, wherein a length of the inactive data transmission timer is configured by any of a RRC reconfiguration message received by the terminal (810) prior to the terminal (810) transitioning into an inactive state, in a RRC release message used to configure the terminal (810) into the inactive state, and in system information of any message where data transmission is performed.

7. The method of claim 1, further comprising:
receiving (222), by the terminal (810), a MAC control element, CE, from the network node that includes an indication to release the network temporary identifier;
responsive to receiving the MAC CE from the network node, stopping, by the terminal (810), monitoring of the control channel with the network temporary identifier configured for the terminal; and
discarding, by the terminal (810), the network temporary identifier comprising a C-RNTI.

8. A method for wireless communication, comprising:
receiving (106B; 210), by a network node (805), a first message to start a data communication resume
procedure from a terminal (810) in a first state, wherein the first message is a radio resource control, RRC, resume request message that is received through a configured grant resource; and
transmitting (212), by the network node, a response to the first message to the terminal (810) monitoring a control channel with a network temporary identifier for the response to the first message, wherein the network temporary identifier is a cell radio network temporary identifier, C-RNTI,
the method **characterized in that** the C-RNTI is configured by the network node when the terminal (810) entered an inactive state in response to transmitting a radio resource control release message.

9. The method of claim 8, wherein the first message includes a data protocol data unit, PDU, and/or a medium access control, MAC, service data unit, SDU packet.

10. The method of claim 8, further comprising:
transmitting (114), by the network node, an RRC release message to the terminal (810), wherein the terminal (810) is configured to stop monitoring control channel with the network temporary identifier configured for the terminal (810) and discard the network temporary identifier responsive to receiving the RRC release message from the network node; or
transmitting (222), by the network node, a MAC control element, CE, to the terminal (810) that includes an indication to release the network temporary identifier, wherein the terminal (810) is configured to stop monitoring of the control channel with the network temporary identifier configured for the terminal (810) and discard the network temporary identifier comprising a C-RNTI.

11. An apparatus for wireless communication comprising a processor that is configured to carry out the method of any of claims 1 to 10.

12. A non-transitory computer readable medium having code stored thereon, the code when executed by a processor, causing the processor to implement a method recited in any of claims 1 to 10.

## Patentansprüche

1. Verfahren für eine Drahtloskommunikation, aufweisend:
Übertragen (106B; 210; 702), durch ein Endgerät (810) in einem ersten Zustand, einer ersten Nachricht an einen Netzwerkknoten (805), um eine Datenübertragungswiederaufnahmeprozedur zu dem Netzwerkknoten zu starten, wobei die erste Nachricht eine Funkressourcensteuerungswiederaufnahmeanforderungsnachricht, RRC-Wiederaufnahmeanforderungsnachricht, ist, die über eine konfigurierte Gewährungsressource übertragen wird; und
Überwachen (704), nach Übertragung der ersten Nachricht, eines Steuerungskanals mit einer temporären Netzwerkkennung für eine Antwort auf die erste Nachricht, wobei die temporäre Netzwerkkennung eine temporäre Zellfunknetzwerkkennung, C-RNTI, ist, wobei das Verfahren
**dadurch gekennzeichnet ist, dass** die C-RNTI konfiguriert wird, wenn das Endgerät (810) als Antwort auf ein Empfangen einer Funkressourcensteuerungsfreigabenachricht in einen inaktiven Zustand eingetreten ist.

2. Verfahren nach Anspruch 1, wobei die erste Nachricht durch umfassen einer Datenprotokolldateneinheit, PDU, und/oder eines Medienzugriffssteuerungsdienstdateneinheitspakets, MAC-SDU-Paket, übertragen wird.

3. Verfahren nach Anspruch 1, zusätzlich aufweisend:
Empfangen (110; 216), durch das Endgerät (810), einer ersten Datenübertragung, die durch die überwachte temporäre Netzwerkkennung geplant ist, von dem Netzwerkknoten; und
Übertragen (112; 218), durch das Endgerät (810), einer zweiten Datenübertragung, die durch die überwachte temporäre Netzwerkkennung geplant ist, an den Netzwerkknoten.

4. Verfahren nach Anspruch 1, zusätzlich aufweisend:
Empfangen (114), durch das Endgerät (810), einer RRC-Freigabenachricht von dem Netzwerkknoten; und
als Reaktion auf das Empfangen der RRC-Freigabenachricht, Stoppen, durch das Endgerät, des Überwachens des Steuerungskanals mit der temporären Netzwerkkennung, die für das Endgerät konfiguriert ist, und Verwerfen der temporären Netzwerkkennung.

5. Verfahren nach Anspruch 4, zusätzlich aufweisend:
Auslösen (214), durch das Endgerät (810), eines ersten Zeitgebers als Reaktion auf das Empfangen der Antwort auf die erste Nachricht, wobei das Endgerät (810) den Steuerungskanal mit der temporären Netzwerkkennung, die für das Endgerät (810) konfiguriert ist, als Reaktion auf das Auslösen eines Zeitgebers für eine inaktive Datenübertragung überwacht;
Empfangen, durch das Endgerät (810), von PDCCH-Planungsinformationen mit einer C-RNTI; und
als Reaktion auf das Empfangen der PDCCH-Planungsinformationen mit der C-RNTI, Neustarten, durch das Endgerät (810), des Zeitgebers für die inaktive Datenübertragung, Erfassen (220), durch das Endgerät (810), eines Ablaufs des Zeitgebers für die inaktive Datenübertragung; und
als Reaktion auf das Erfassen des Ablaufs des Zeitgebers für die inaktive Datenübertragung, Durchführen, durch das Endgerät, eines beliebigen von dem Stoppen des Überwachens des Steuerungskanals mit der temporären Netzwerkkennung, die für das Endgerät konfiguriert ist, dem Verwerfen der temporären Netzwerkkennung und/oder einem Aussetzen eines dedizierten Funkträgers, DRB, und/oder eines Paketdatenkonvergenzprotokolls, PDCP.

6. Verfahren nach Anspruch 5, wobei eine Länge des Zeitgebers für die inaktive Datenübertragung durch beliebige von einer RRC-Rekonfigurationsnachricht, die durch dem Endgerät (810) vor einem Übergehen des Endgeräts (810) in einen inaktiven Zustand empfangen wird, einer RRC-Freigabenachricht, die verwendet wird, um das Endgerät (810) in den inaktiven Zustand zu konfigurieren, und Systeminformationen einer beliebigen Nachricht, wo Datenübertragung durchgeführt wird, konfiguriert ist.

7. Verfahren nach Anspruch 1, zusätzlich aufweisend:
Empfangen (222), durch das Endgerät (810), eines MAC-Steuerungselements, MAC-CE, von dem Netzwerkknoten, das eine Anweisung, die temporäre Netzwerkkennung freizugeben, umfasst;
als Reaktion auf das Empfangen des MAC-CE von dem Netzwerkknoten, Stoppen, durch das Endgerät (810), des Überwachens des Steuerungskanals mit der temporären Netzwerkkennung, die für das Endgerät konfiguriert ist; und
Verwerfen, durch das Endgerät (810), der temporären Netzwerkkennung, aufweisend eine C-RNTI.

8. Verfahren für die Drahtloskommunikation, aufweisend:
Empfangen (106B; 210), durch einen Netzwerkknoten (805), einer ersten Nachricht, um eine Datenübertragungswiederaufnahmeprozedur von einem Endgerät (810) in einem ersten Zustand zu starten, wobei die erste Nachricht eine Funkressourcensteuerungswiederaufnahmeanforderungsnachricht, RRC-Wiederaufnahmeanforderungsnachricht, ist, die über eine konfigurierte Gewährungsressource empfangen wird; und
Übertragen (212), durch den Netzwerkknoten, einer Antwort auf die erste Nachricht an das Endgerät (810), das einen Steuerungskanal mit einer temporären Netzwerkkennung für die Antwort auf die erste Nachricht überwacht, wobei die temporäre Netzwerkkennung eine temporäre Zellfunknetzwerkkennung, C-RNTI, ist, wobei das Verfahren **dadurch gekennzeichnet ist, dass** die C-RNTI durch den Netzwerkknoten konfiguriert wird, wenn das Endgerät (810) als Antwort auf das Übertragen einer Funkressourcensteuerungsfreigabenachricht in einen inaktiven Zustand eingetreten ist.

9. Verfahren nach Anspruch 8, wobei die erste Nachricht eine Datenprotokolldateneinheit, PDU, und/oder ein Medienzugriffssteuerungsdienstdateneinheitspaket, MAC-SDU-Paket, umfasst.

10. Verfahren nach Anspruch 8, zusätzlich aufweisend:
Übertragen (114), durch den Netzwerkknoten, einer RRC-Freigabenachricht an das Endgerät (810), wobei das Endgerät (810) konfiguriert ist, um das Überwachen des Steuerungskanals mit der temporären Netzwerkkennung, die für das Endgerät (810) konfiguriert ist, zu stoppen und die temporäre Netzwerkkennung als Reaktion auf das Empfangen der RRC-Freigabenachricht von dem Netzwerkknoten zu verwerfen; oder
Übertragen (222), durch den Netzwerkknoten, eines MAC-Steuerungselements, MAC-CE, an das Endgerät (810), das eine Anweisung, die temporäre Netzwerkkennung freizugeben, umfasst, wobei das Endgerät (810) konfiguriert ist, um das Überwachen des Steuerungskanals mit der temporären Netzwerkkennung, die für das Endgerät (810) konfiguriert ist, zu stoppen und die temporäre Netzwerkkennung, aufweisend eine C-RNTI, zu verwerfen.

11. Einrichtung für die Drahtloskommunikation, aufweisend einen Prozessor, der konfiguriert ist, um das Verfahren nach einem der Ansprüche 1 bis 10 vorzunehmen.

12. Nichtflüchtiges computerlesbares Medium, das über darauf gespeicherten Code verfügt, wobei der Code, wenn er durch einen Prozessor ausgeführt wird, den Prozessor veranlasst, ein Verfahren, das in einem der Ansprüche 1 bis 10 angegeben ist, zu implementieren.

## Revendications

1. Procédé pour une communication sans fil, comprenant :
la transmission (106B ; 210 ; 702), par un terminal (810) dans un premier état, d'un premier message à un nœud de réseau (805) pour démarrer une procédure de reprise de communication de données au nœud de réseau, dans lequel le premier message est un message de demande de reprise de commande de ressources radio, RRC, qui est transmis par le biais d'une ressource d'octroi configurée ; et
la surveillance (704), après la transmission du premier message, d'un canal de commande avec un identifiant temporaire de réseau pour une réponse au premier message, dans lequel l'identifiant temporaire de réseau est un identifiant temporaire de réseau radio cellulaire, C-RNTI, le procédé étant **caractérisé en ce que** le C-RNTI est configuré lorsque le terminal (810) est entré dans un état inactif en réponse à la réception d'un message de libération de commande de ressources radio.

2. Procédé selon la revendication 1, dans lequel le premier message est transmis en comportant une unité de données de protocole, PDU, de données et/ou un paquet d'unité de données de service, SDU, de commande d'accès au support, MAC.

3. Procédé selon la revendication 1, comprenant en outre :
la réception (110 ; 216), par le terminal (810), d'une première transmission de données planifiée par l'identifiant temporaire de réseau surveillé en provenance du nœud de réseau ; et
la transmission (112 ; 218), par le terminal (810), d'une seconde transmission de données planifiée par l'identifiant temporaire de réseau surveillé au nœud de réseau.

4. Procédé selon la revendication 1, comprenant en outre :
la réception (114), par le terminal (810), d'un message de libération RRC en provenance du nœud de réseau ; et
en réponse à la réception du message de libération RRC, l'arrêt, par le terminal, de la surveillance d'un canal de commande avec l'identifiant temporaire de réseau configuré pour le terminal et la suppression de l'identifiant temporaire de réseau.

5. Procédé selon la revendication 4, comprenant en outre :
l'initiation (214), par le terminal (810), d'un premier temporisateur en réponse à la réception de la réponse au premier message, dans lequel le terminal (810) surveille le canal de commande avec l'identifiant temporaire de réseau configuré pour le terminal (810) en réponse à l'initiation d'un temporisateur de transmission de données inactive ;
la réception, par le terminal (810), d'informations de planification PDCCH avec un C-RNTI ; et
en réponse à la réception des informations de planification PDCCH avec le C-RNTI, le redémarrage, par le terminal (810), du temporisateur de transmission de données inactive, la détection (220), par le terminal (810), d'une expiration du temporisateur de transmission de données inactive ; et
en réponse à la détection de l'expiration du temporisateur de transmission de données inactive, la réalisation, par le terminal, de l'une quelconque parmi l'arrêt de la surveillance du canal de commande avec l'identifiant temporaire de réseau configuré pour le terminal, la suppression de l'identifiant temporaire de réseau, et/ou la suspension d'un support radio dédié, DRB, et/ou d'un protocole de convergence de données par paquets, PDCP.

6. Procédé selon la revendication 5, dans lequel une durée du temporisateur de transmission de données inactive est configurée par l'un quelconque parmi un message de reconfiguration RRC reçu par le terminal (810) avant que le terminal (810) ne passe à un état inactif, dans un message de libération RRC utilisé pour configurer le terminal (810) dans l'état inactif, et dans des informations système d'un quelconque message où une transmission de données est réalisée.

7. Procédé selon la revendication 1, comprenant en outre :
la réception (222), par le terminal (810), d'un élément de commande, CE, MAC, en provenance du nœud de réseau qui comporte une indication pour libérer l'identifiant temporaire de réseau ;
en réponse à la réception du CE MAC en provenance du nœud de réseau, l'arrêt, par le terminal (810), de la surveillance du canal de commande avec l'identifiant temporaire de réseau configuré pour le terminal ; et
la suppression, par le terminal (810), de l'identifiant temporaire de réseau comprenant un C-RNTI.

8. Procédé pour une communication sans fil, comprenant :
la réception (106B ; 210), par un nœud de réseau (805), d'un premier message pour démarrer une procédure de reprise de communication de données en provenance d'un terminal (810) dans un premier état, dans lequel le premier message est un message de demande de reprise de commande de ressources radio, RRC, qui est reçu par le biais d'une ressource d'octroi configurée ; et
la transmission (212), par le nœud de réseau, d'une réponse au premier message au terminal (810) surveillant un canal de commande avec un identifiant temporaire de réseau pour la réponse au premier message, dans lequel l'identifiant temporaire de réseau est un identifiant temporaire de réseau radio cellulaire, C-RNTI, le procédé étant **caractérisé en ce que** le C-RNTI est configuré par le nœud de réseau lorsque le terminal (810) est entré dans un état inactif en réponse à la transmission d'un message de libération de commande de ressources radio.

9. Procédé selon la revendication 8, dans lequel le premier message comporte une unité de données de protocole, PDU, de données et/ou un paquet d'unité de données de service, SDU, de commande d'accès au support, MAC.

10. Procédé selon la revendication 8, comprenant en outre :
la transmission (114), par le nœud de réseau, d'un message de libération RRC au terminal (810), dans lequel le terminal (810) est configuré pour arrêter la surveillance d'un canal de commande avec l'identifiant temporaire de réseau configuré pour le terminal (810) et supprimer l'identifiant temporaire de réseau en réponse à la réception du message de libération RRC en provenance du nœud de réseau ; ou
la transmission (222), par le nœud de réseau, d'un élément de commande, CE, MAC au terminal (810) qui comporte une indication pour libérer l'identifiant temporaire de réseau, dans lequel le terminal (810) est configuré pour arrêter la surveillance du canal de commande avec l'identifiant temporaire de réseau configuré pour le terminal (810) et pour supprimer l'identifiant temporaire de réseau comprenant un C-RNTI.

11. Appareil pour une communication sans fil comprenant un processeur qui est configuré pour effectuer le procédé selon l'une quelconque des revendications 1 à 10.

12. Support non transitoire lisible par ordinateur sur lequel est stocké un code, le code, lorsqu'il est exécuté par un processeur, amène le processeur à mettre en œuvre un procédé selon l'une quelconque des revendications 1 à 10.
